# EUROPEAN PATENT SPECIFICATION

(11) **EP 0 730 426 B1**
(45) Date of publication and mention of the grant of the patent: **29.12.1997**
(21) Application number: 95902066.0
(22) Date of filing: 15.11.1994
(51) Int. Cl.: A47J 36/38, F24C 15/20, A47J 37/04

(54) **APPARATUS FOR HEAT TREATMENT OF A PARTICULAR FOOD PRODUCT**
GERÄT ZUR WÄRMEBEHANDLUNG EINES NAHRUNGSMITTELS
APPAREIL DE TRAITEMENT THERMIQUE D'UN PRODUIT ALIMENTAIRE PARTICULIER

(30) Priority: 19.11.1993 DK 130693
(43) Date of publication of application: 11.09.1996
(73) Proprietor: Hansen, Ejner Björn, 5210 Odense NV (DK)
(72) Inventor: Hansen, Ejner Björn, 5210 Odense NV (DK)
(74) Representative: Holme, Edvard
(86) International application number: PCT/DK94/00431
(87) International publication number: WO 95/13734

(56) References cited:
- WO-A-93/10698
- FR-A- 2 401 387
- US-A- 3 783 854

## Description

The invention relates to an apparatus for heat treatment of a particular food product in a treatment chamber in which the product is exposed to heat stress from a source of heat, and the gasses, which the product liberates during this process, are sucked out through a ventilator in an air stream, which, via a filter device for removal of the gasses from the air and an air connection between filter device and treatment chamber, are thrown out into the open air.

A popular particular food product are French fried potatoes which in considerable amounts are served in portions in restaurants, grill bars, cafeterias or in the street from hot-dog stands. French fried potatoes are served either alone as a meal by themselves or in connection with other courses. In any case, there will be a demand for French fried potatoes being freshly heated and crispy immediately after the order has been places. Since French fried potatoes are unsuitable for long term keeping in this condition, the preparation must necessarily take place by means of a process which quickly and easily can transform the raw and possibly pre-processed material into the ready product.

This demand is to the utmost full-filled by deep-fat frying, where a basket containing a portion of potato strips is lowered into a pool of melted lard or cooking oil. The lard or the oil is quickly absorbed by the potato strips which thereby are heatened and become a crispy and crunchy consistency with an almost brown colour, mainly deriving from a caramelizing of the sugar contents of the potato pieces.

When the potato pieces are treated in this way they will as French fried potatoes have a fatty or oily contents of 30%. Considering the very big amounts of French fried potatoes which over the years are consumed especially in the industrialized countries, this otherwise so popular food product can be a serious threat to national health. Frequently consuming too much fat will in the long run deposit fatness and cause various diseases.

In order to eliminate these problems various apparatuses have been thought out concerning treatment of pre-processed potatoes containing a relatively low rate of fat. With these apparatuses it is possible to make crispy and tasty French fried potatoes with a moderate fatty contents of approximately 6%.

In this way the problem of the high fatty contents in deep-fried potatoes has been relieved, but in deep-frying as well as in more simple apparatuses it still is a big problem that the process sends smoke and smell out into the surrounding to inconvenience of the serving staff and the customers present in the room. Some apparatuses have therefore been supplied with filters for cleaning the air before it reaches the room. Neither of these apparatuses have fully lived up the demands made.

An apparatus of the kind initially mentioned, must be simple and relatively inexpensive to produce and take up a minimum of room under narrow and limited conditions in the premises where the apparatus is places. Furthermore, it is also very important that the apparatus is environmentally compatible, which means that the apparatus must be able to function without the serving staff nor the customers feeling a strong and unpleasant effect of heat and without sending an evil-smelling smoke and smell into the surroundings.

The new and characteristic way of obtaining this effect in such an apparatus is to elaborate the air connection as convector.

The apparatus as invented is suitable for treatment of pre-fried potato pieces with a fatty contents of for example approximately 6%. The potato pieces also contain water, which partly has to be removed in order to obtain the crisp and crunchy consistence of the potato pieces, which is characteristic of French fried potatoes. This means that a successive renewal of the air in the treatment chamber has to take place or else the process will be retained or stop, when the air in the chamber has been saturated with steam.

The air renewal takes place when the ventilator sucks air out of the treatment chamber while fresh air is pressed into it via an opening for influx of air in the wall of the chamber. In this way an air current is produced which is to be thrown off into the open air. In consideration of the surrounding environment it is, prior to that, necessary to let the air current pass the filter device to remove the air containing steam, fat, smell and other impurities.

The temperature of the air in the treatment chamber can at least reach about 250 C in the final step of the process. If air with such a high temperature is sent through the filter device this might be damaged and might work with reduced effectiveness so the air will not be cleaned satisfactorily. To release this problem the air current could be increased in excess of the optimum progress. However, that would imply extra running expenses for heating the additional air volume and furthermore both ventilator, filter and other construction details of the apparatus would have to be laid out with corresponding big dimensions, whereby the apparatus would be clumsy and bulky, and to produce it would be at an exorbitant price.

By using the air connection between the treatment chamber and the filter device as convector, the air can now be cooled down to a temperature best suitable for the filter device. Normally the various components will be built in a cabinet. In the wall of the cabinet it would be a good idea to construct holes as well over as under the area where the convector is placed. The updrift in the heatened air surrounding the convector will then drift a secondary air current past the convector, whereby the primary air current in the convector is cooled down. In the same way a secondary air current can be send past areas of the wall of the cabinet, the wall which is close to the very hot chamber of treatment. Thereby these areas are cooled and therefore they will not be uncomfortably hot for the persons who are to operate the apparatus.

When the components of the apparatus are build in a cabinet it will be appropriate to construct a lead-in opening with a corresponding door in as well cabinet as in treatment chamber. By interrelate a combination of the two doors with a suitable rod system, they can be made to open and close at the same time. The serving staff will therefore only have to open the outer door of the cabinet to get immediate access to the treatment chamber when this has to be filled with a new portion of potato pieces. In this connection the two doors can be hinged in such a way that they in open position together form a lock between treatment chamber and cabinet, through which the product easily and safely can be poured into the treatment chamber.

The convector can be produced in many different ways within the limits of the inventions. Thus it can be produced as a channel with ribs which give the convector a big surface for effective transmission of the primary air current's heat contents to the secondary air, which flows past the convector. By a special advantageous construction form the convector can consist of a number of heat-conduction tubes which are placed at intervals side by side in such a way, that the secondary air current can pass between the tubes, which for example can be made of copper or other heat-conduction material.

For heating the potato pieces radiant heat can be used with advantage. This is a very intensive form of energy providing a quick and concise heat treatment of the potato pieces with the least possible loss of energy to the surroundings. The radiant heat element will in that case be placed inside the treatment chamber which may be constructed in different ways. For example, the chamber may be a rotating cylinder in which the potatoes during the rotation are tubling between each other and therefore receive a uniformity of radiation on all sides. The preferable construction form means that the treatment chamber will be stationary, and the potato pieces will be rotated by rotating driving wheel with carriers.

The stationary construction of the treatment chamber means that the in- and out-lets and the closing mechanism of these can be constructed in a simple and reliable manner. The out-let can thus conveniently be constructed permanently in the bottom area of the treatment chamber. In this way the ready French fried potatoes will automatically fall out under the gravitational pull, when a sliding damper is pulled away. In this process the driving wheel continues to rotate, and therefore a complete emptying of the treatment chamber takes place.

The French fried potatoes fall through a shaft which is constructed in the cabinet and has an opening at the bottom, through which opening a tray for collecting the French fried potatoes can be inserted. The fresh French fried potatoes will immediately after the heat treatment continue to smell, however, the smell will be sucked into the treatment chamber via its air in-let, while the ventilator thereunder will continue to be operating.

FR-A-2 401 387 discloses apparatus with the pre-characterizing features of claim 1.

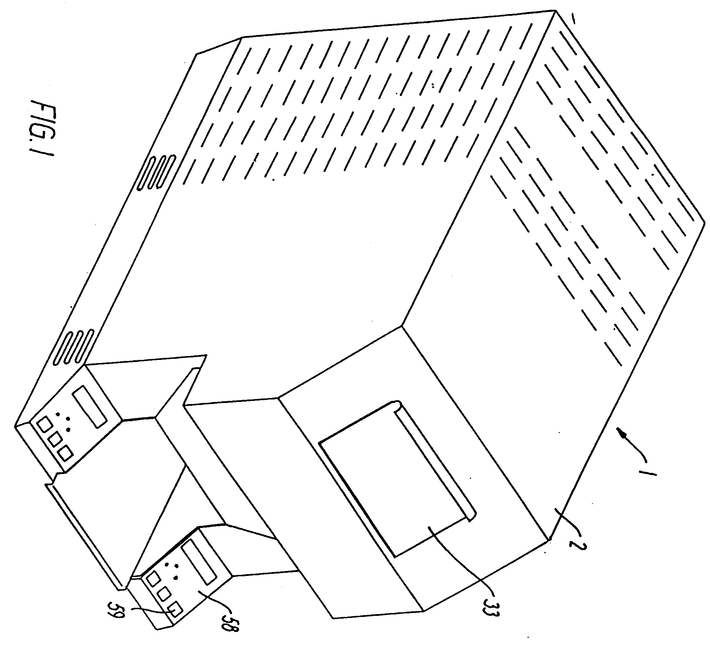

More advantageous characteristics and effects of the invention are described in more details below, the description explaining a construction referring to the drawing where
Fig. 1 in perspective shows an apparatus according to the invention,
Fig. 2 the same, but without parts of the apparatus in order to become a better view of the internal construction,
Fig. 3 a schematic vertical long view through the apparatus as shown in Fig. 1 and 2, with open in-let openings ready to take in a portion of fresh potato pieces for treatment,
Fig. 4 the same, but with closed in-let openings and the portion of potato pieces under treatment taken in,
Fig.5 the same, but where the emptying opening now is open and the ready French fried potatoes are shown falling down in a tray under the opening, and
Fig 6a,b and c schematically a mechanism for opening the out-let shown in three different positions.

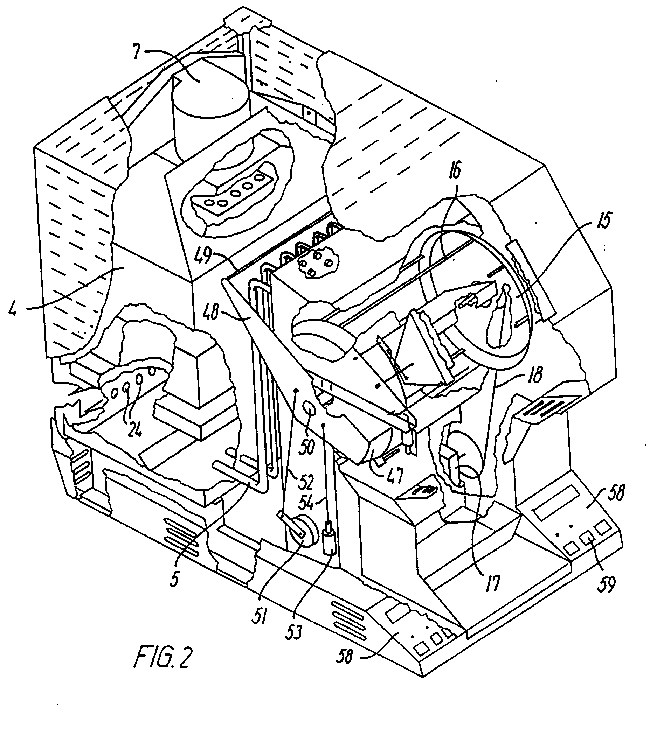

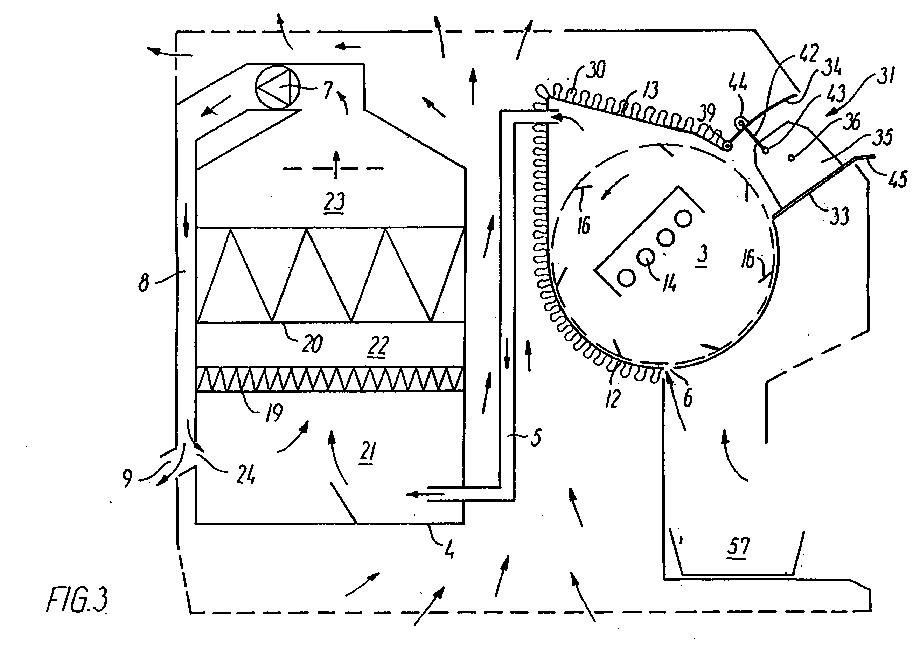

In Fig.l is shown an apparatus as invented. The apparatus is totally shown with the referring number 1 and has a cabinet 2, which in the figure hides the various elements of the figure. However, these are shown in Fig.2 where part of the cabinet and other elements now have been removed. The construction is also shown schematically in the vertical long view in Fig.3, 4 and 5. The operating main components of the apparatus are a treatment chamber 3, a filter device 4 and a number of copper tubes 5, which form an air connection between the treatment chamber and the in-let of the filter device. The copper tubes 5 are also functioning as a convector, the importance of which will be explained in details later.

In the wall of the treatment chamber 3, opposite to the connection of the copper tubes 5, an air in-let opening 6 is formed. The discharge end of the filter device is, in the example shown, placed on top and here is a ventilator 7 which via the filter device 4 and the copper tubes 5 sucks out the air from the treatment chamber 3.

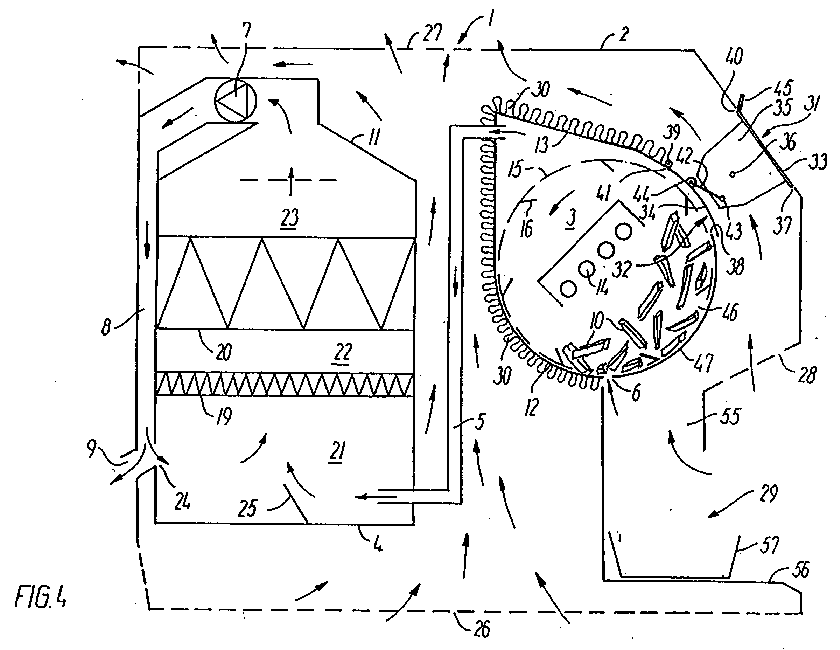

In the situation shown in Fig.4 a portion of potato pieces are getting treated. As a result of the fact that the ventilator 7 produces low pressure in the treatment chamber 3, fresh air will penetrate through the air in-let opening 6 in replacement of the air sucked out. Thereby a primary air stream is produced which will be thrown out into the open air through a vertical air discharging pipe turning downwards.

The treatment chamber is downwards limited by a cylindrical jacket 12, which, shown in cross section, on top goes over into a pointed cap 13, from which the air in the treatment chamber is sucked out through the copper tubes 5. In the treatment chamber are also placed a number of quartz lamps 14 which send an infra-red radiant heat towards the potato pieces 10. These, which are pre-fried with fatty contents of approximately 6%, are thereby treated in such way that the potato pieces are turned into ready warm and crisp French fried potatoes. To ensure a uniform and equal treatment on all sides of these French fried potatoes, there has, concentrically to the cylindrical cap 12, been placed a rotating driving wheel 15 with carriers 16 along the periphery. As best seen from Fig.2, the wheel is driven by a motor 17 via a chain drive 18. When the wheel rotates the potato pieces 10 are by the carriers 16 constantly during the process being tumbled between one another so that they all the time are being turned.

The intensive heat radiation from the quartz lamps will rapidly bring the temperature in the treatment chamber 3 up on relatively high degrees, which often will be approximately 250 C. By these high temperatures the potato pieces will deliver humidity, fat, smell and other gasses to the air current passing through the chamber. This air current is via the copper tubes 5 let into the filter device 4. This consists of a filter house 11 in which a fat filter 19 first has been built in, and then a smell- and smoke filter 20. According to the needs there might also be other filter satse (not shown) built in. Under the fat filter 19 there is also an air in-let chamber 21, between the two filters a middle chamber and over the smell- and smoke filter 20 an air out-let chamber 23.

The filter device is serving the purpose of throwing the air into the open air without bothering the surroundings. As an extra safety against this, there is in the air in-let chamber 21's wall opposite to the air out-let canal 8's end 9 constructed a number of intake openings 24. As a result of the low pressure in the air in-let chamber 21, part of the air out-let canal 8 will be sucked in once more through these inlet ports 24 and be subject to another cleaning by the following re-circulation through the filter device. It has been clear that it especially concerns the more heavy and slowly running remaining pollution, if any, of humidity and fat which are inclined to be sucked in crosswise of the main air current. An air deflection plate 25, which is placed on level with the copper tube 5's mouth of the air in-let chamber 21 serves for bending the air admissioned up against the fat filter 19 instead of towards the in-let port 24, whereby the static low pressure of the air in-let chamber 21 could compensate for the dynamic pressure in the air current to the effect, that the intake effect aimed at through the in-let ports 24 would fail.

During the heat treatment of the potato pieces in the treatment chamber 3, the temperature, as mentioned earlier, might rise to approximately 250 C. In the long run the filter device cannot stand the flow of such hot air, and it will anyway be working at so reduces effectiveness, that the air thrown off would not be satisfactorily cleared. Thus the fat filter 19 will only to a limited extend be able to retain the very hot fat steams, which therefore will be inclined to block up the following smell- and smoke filter 20, which then step by step will be set out of function. By increasing the flowing air volume very significantly the air temperature will, however, be lowered to an acceptable level, but this would result in the fact that both ventilator, filter device and other construction components should be dimensioned according to this heavily increased air current, but that would mean that the whole apparatus would be out of proportion to the costs for heatening the air current and the disadvantages, if any, from the very hot air, which is sent out in often smaller rooms, where it already might be very hot.

The present invention goes in another direction and limits the volume of the air current into precisely the size which is necessary to obtain the optimum development of the heating treatment process, including the removal of the necessary humidity of the potato pieces. The ventilator therefore is dimensioned to be able to suck out exactly this volume of air in breaking down the combined flow resistance through the apparatus. This flow resistance can be adjusted by dimensioning the air in-let port 6 by means of a adequately small cross section so that the air throttles by passing the port.

Thus the air volume is limited to the absolutely necessary flowing from the treatment chamber 3's cap 13 to the filter device 4's air in-let chamber 21 via the copper tubes 5. In return the air has been heatened to a maximum in the treatment chamber. To prevent the air from reaching into the filter device 4 in this very hot, and consequently damaging condition, the air connection between the chamber and the filter device - in this case by means of the copper tubes 5 - constructed as a convector giving off heat from the flowing air to the surroundings. In order to remove this heat from the cabinet, under the copper tubes 5 there is constructed a pair of lower ventilation holes 26, and over the copper tubes 5 a pair of upper ventilation holes 27. The copper tubes 5 heaten the surrounding air, which, due to the natural updrift, will rise about the copper tube 5, as shown by arrows, and come out above the upper ventilation holes 27, while new fresh air will flow into the lower ventilation holes 26. This secondary air current will, together with the primary air current in the copper tubes 5, work as a kind of heat exchanger cooling the air in the primary air current down to an acceptable level before it reaches the filter device 4.

In the front of the cabinet, under the treatment chamber 3, there is furthermore constructed another pair of ventilation in-lets 28 and an out-let 29 for removing the ready French fried potatoes. As shown, the treatment chamber 3 is places at distance behind the cabinet 2. In the space then formed the air will be heatened whereby another secondary air current will arise flowing in direction of the arrows through the in-lets 28, 29, through the space and coming out on the top through the upper ventilation in-lets 27. This other secondary air current serves the purpose of cooling down the front part of the cabinet preventing it from becoming too hot for the serving staff. Also to prevent the cabinet from getting too hot and also for energy-economic reasons, the treatment chamber 3, along the outer side, is provided with a heat-insulating material 13 in the areas where it practically can be done.

During the heat treatment process the halogen lamps 14 are a source of heat and in very short time they produce an intensive heat. The temperature will therefore here be very high, for example about 250 C. The concentrated heat energy of the treatment chamber must necessarily be let out into the surroundings in the same speed as produced. This is a significant element of the inventional idea that the production takes place in an environmentally compatible way, that means without inconvenience to the serving staff nor to the customers. This is obtained in a simple and cheap way by means of the entire flow of the apparatus, where the primary air current together with the first and secondary air current, as shown with the arrows in Fig.3, 4 and 4, distribute the heat energy concentrated in the treatment chamber 3 along the main part of the surface of the cabinet, resulting in a heavily reduced air temperature. The secondary air currents which to a high extend are contributing to this surprisingly advantageous effect, are driven by the waste heat itself deriving from the process, and therefore it does not require any form of supplementary energy supply.

For leading-in the potato pieces there is in the cabinet a first in-let opening 31 and an opposite second in-let opening 32 in the treatment chamber. The first opening 31 can be closed with a first pivoting door 33 and the second opening 32 with a second pivoting door 34. The first door 33 is U-shaped with side flaps side 35. Each of these side flaps 35 is suspended on a pivot 36 which is places on separate rigid brackets (not shown) in the cabinet. The pivots 36 are placed at equal distance from the lower edges of the two in-let openings 37, 38 and therefore they will, as shown in Fig.3, in open position build a bridge between the two edges 37, 38. The door 33 will then lay as a chute under the potato pieces, which are rushed into the treatment chamber 3.

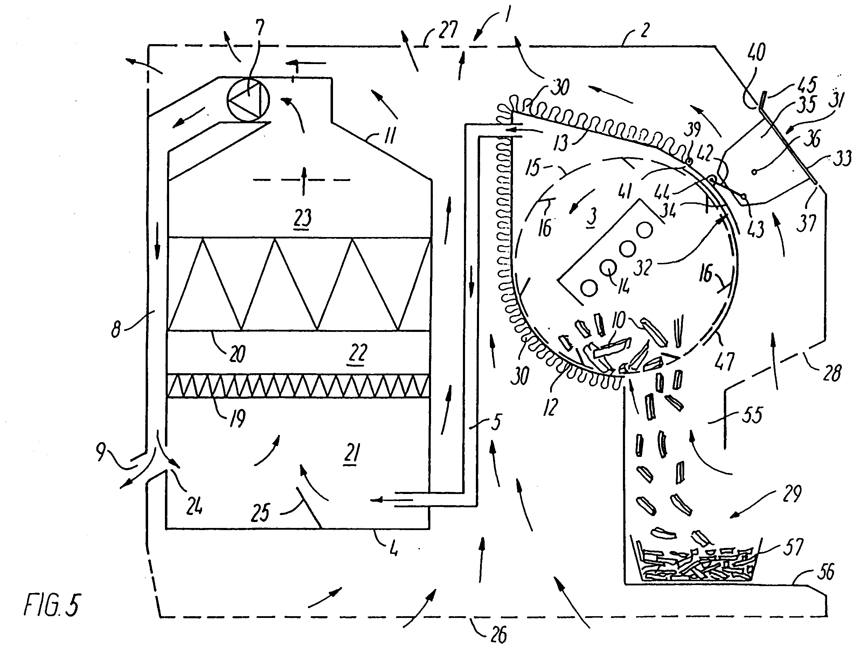

The second door 34 can turn around a top hinge from closed position, as shown i Fig.4 and 5, to open position, as shown in Fig.3, where the door builds a bridge between the in-let openings' upper edges 40,41 and thereby forms a ceiling over the chute, made by the first door. In this way the doors will, in open position, together form an in-let feeder providing a convenient and safe fall of a portion of potato pieces in the treatment chamber, without risking that any of the potato pieces unintendedly fall outside an perhaps remain inside the cabinet.

The two doors 33, 34 are articulated with arms 42, one end of which is pivoting suspended on pivot 43 placed on the flap of the first door and the second end of which is suspended on pivot 44 placed on the second door. The articulation is constructed in such a way that the two doors are forced to follow the opening- and closing movements of one another. Both doors will consequently be open at the same time, as shown in Fig.3, and closed, as shown in Fig. 4 and 5. For activating the door there is a handle 45 on the upper part of the first door 33.

At the lower part the treatment chamber has a discharge opening 46 which can be closed with a slide gate 47 placed concentricity with the axis of the chamber. This slide gate 47 can pivotally shift form the closed position, as shown in Fig.3 and 4, to open position, as shown in Fig.5.

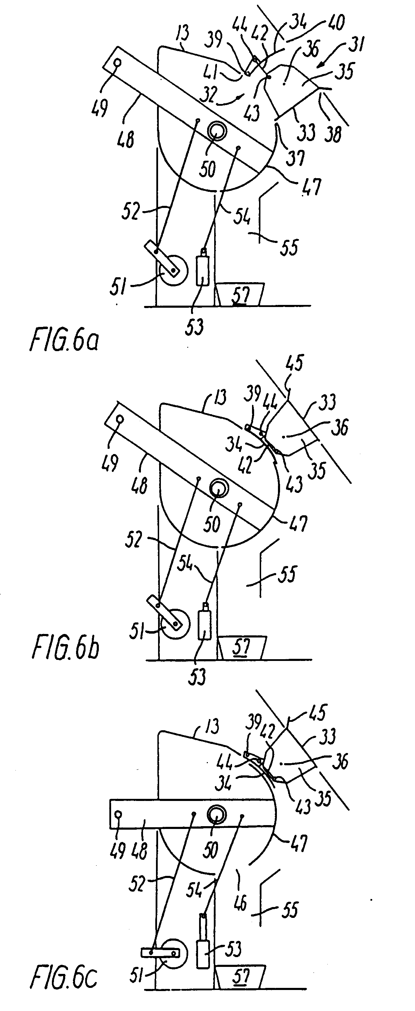

While the in-let openings are meant to be handled manually the slide gate 47 will automatically be opened and closed after each working cycle by a turning mechanism built for this purpose. This mechanism can be seen in Fig.6a,b and c showing the slide gate in both closed (Fig.6a, b) as open position (Fig.6c) and also the position of the in-let openings *33*,*34* at the same time. The mechanism consists of, as best can be seen from Fig.2, two lever arms 48 which are placed on each side of the treatment chamber 3. The rear ends of the lever arms are connected to a rod 49 and the fore ends to the slide gate 47, and they can turn around a shaft 50 the axis of which is congruent to the axis of the treatment chamber. A turning magnet 51, which via a rod or wire is connected to the lever arm 48 at a distance behind the shaft 50, serves the purpose of lever arms 48 between the two outer positions in cooperation with a counter weight 53, which via a wire 54 is connected to the lever arms 48 at a distance in front of the shaft 50.

Under the discharge opening 46 there is in the cabinet 2, a shaft 55 for the ready French fried potatoes, a shaft which can be removed through the removal opening 29 in the wall of the shaft. At the bottom of the shaft 53 there is a landing 56 on which a tray 51 can be placed to collect the product and for a later serving, if necessary.

As shown i Fig.l and 2 there is on the lower part of the cabinet a control panel 58 with pushbuttons 59 for activating a working cycle and adjustment of temperatures and process time so that the ready French fried potatoes can be served in exactly the quality as demanded by the customers.

By activating the pushbuttons 59 orders are given to an electronically control unit (not shown) which controls all the functions of the apparatus as well as the whole process.

The apparatus described above is most suitable for quick and effective preparation of pre-fried French fried potatoes in portions containing such low fat contents as 6%. These pre-fried French fried potatoes can for example be packed and frozen in bags, each bag containing 165 grams of French fried potatoes. On the premises where the French fried potatoes are to be prepared, they will be conserved in a deep-freezing box at a temperature of approximately -18 C, until they are going to be used.

When the apparatus is not in daily use, but ready to be used, there will be a temperature in the treatment chamber of approximately 200 C, so no time is wasted in heatening up the chamber when a treatment cycle is to begin.

When a customer places an order of a portion of hot French fried potatoes, the in-let doors 33, 34, as shown in Fig.3, are opened and together they will form an in-let feeder. In this position the door will block for the passage of the second secondary air current through the space between the treatment chamber and the cabinet. The second secondary air current, which on this spot can be very hot, is therefore unable to get through the in-let openings and be of inconvenience or damage to the person activating the apparatus. With the ventilator connected there will furthermore now positively generate an air current over the in-let feeder with direction towards the chamber, whereby it effectively is prevented that any of the air filled with smoke and smell of the chamber is let out through the in-let openings now fully open.

As soon as the doors are open, a portion of deep-frozen, pre-fried French fried potatoes with effortless ease can be poured into the treatment chamber through the in-let feeder between the doors which are open. The existence of the feeder makes automatically sure that the potato pieces will not fall outside, and the serving staff therefore will not have to pay this part of the operation any special attention, and will instead be able to allow themselves to talk to the customers.

Immediately after the potato pieces have been poured into the treatment chamber, the doors will be closed again, and the apparatus is activated by pressing the respectively pushbutton 59. The situation will now be, as shown in Fig.4, where the actual heat treatment of the potato pieces takes place and as shown with the arrow, air currents will generate the importance of which has been described on a previous occasion. As it can be seen, the second secondary air current can now pass in the space between the two doors closed so that the first, that is the outer door 31, will not be so hot that the serving staff will burn their fingers in handling the door.

According to the invention the apparatus means that the preparation of a portion of pre-fried, deep-frozen French fried potatoes will typically be of approximately 3 minutes in which time they mainly will run through the following steps of the process.

### l. O-60 sec.

The deep-frozen French fried potatoes are thawing up and the temperature will arise to approximately 120 C. Some water will be set free.

### 2. 60-120 sec.

The temperature will arise to approximately 250 C. Some steam will be set free, and there will be build up a skeleton of starch which at this temperature will coagulate. A slight brownish colour will appear caused by the French fried potatoes' contents of sugar being caramelized. The oil has reach its smoking point on approximately 190 - 200 C. A slight smell and smoke can occur.

### 3. 120 -180 sec.

The actual roasting/combustion where the temperature will arise to approximately 250 C has now begun. After having separated water and building up the skeleton, now in principle a final browning and drying of the French fried potatoes takes place, and thereby they will obtain their characteristic appearance and crisped and crunchy consistence. Humidity and smoke are in the process sucked out from the chamber while fresh air for the treatment at the same time is flowing in through the air in-let opening in the wall of the chamber.

The electronical control unit (not shown) controls the total time progress and cuts the treatment process after a amount of time adjusted beforehand. It also activates the turning magnet 51 which thereby turns the slide gate 47 and opens the discharge opening 46. This situation is shown in Fig.5. while the driving wheel 15 with the carriers 16 will continue to rotate the ready French fried potatoes will fall down through the shaft 55 on to a tray 57 which in the meantime has been placed on the landing 56. During this the ventilator 7 is kept operating whereby a heavy air current will arise up through the shaft and in to the treatment chamber, as long as the slide gate 47 is open. Thereby it is possible to prevent smoke and smell from coming out into the surroundings from the chamber, and at the same time the remaining stinks from the hot French fried potatoes are sucked out together with the air current into the chamber. The rotating driving wheel will in course of a moment sweep the last French fried potatoes out through the opening of the chamber, and then the opening will close again according to a time schedule adjusted beforehand, because the electronic control unit gives the turning magnet 51 order to close the slide gate 47 back to its closed position.

In only approximately 3 minutes a ordered portion of fresh, hot French fried potatoes can be served in the tray 57.

In direct continuation of the first treatment cycle the next one can begin, but in lack of new orders the apparatus will automatically return to the position of being ready, and the ventilator will stop, but with adequate activation of the halogen lamps to keep a temperature of readiness of approximately 200 C in the treatment chamber.

As it appears from the description above the French fried potatoes can now, by means of the apparatus according to the invention, be served as a delicate and healthy food product with low contents of fat. The preparation takes place with effortless ease with a minimum of working effort from behalf of the serving staff.

The apparatus can also with great advantage be used for many other food product. As example can be mentioned reacted chestnuts, roasted onions and grilled meat in squares.

For the process is used concentrated heat and just enough air renewal necessary to give the product the flavour and consistence as wanted.

The concentrated heat at high temperature in the treatment chamber is distributed by means of a system of air currents along the surface of the cabinet with low temperature. The primary air from the process is cooled prior to the filter device by a secondary air current driven by the waste heat. Therefore the filter device can work eight high reliability and great cleaning effect.

The apparatus is very environmentally compatible since the heat emits with low temperature and the air is thrown off with a high grade of purity. At he same time the apparatus has a compact and space-saving construction.

The apparatus therefore is very suitable to place wherever food products of the above mentioned kind are to be served.

## Claims

1. Apparatus for a heat treatment of a particular food product in a treatment chamber in which the product is exposed to heat stress from a heat source, and the gasses, which the product in the process lets out, are sucked off by means of a ventilator in an air current which via a filter device for removing the gasses from the air and an air connection bet when filter device and treatment chamber are thrown off into the open air, **characterized** by the air connection being constructed as a convector.

2. Apparatus according to claim l, **characterized** by the fact that in the wall of the treatment chamber in especially the opposite side of the convector's connection to the chamber is constructed at least one opening of air intake by a cross section which is adjusted to let the air volume necessary, and adequate for correct heat treatment of the product, pass into the treatment chamber under the influence of pressure difference between this and the open air, which pressure difference is made by the ventilator.

3. Apparatus according to claim 1 and 2, **characterized** by a filter device consisting of a filter house which has a number of filter compositions for removal the contents of the air current of the respective gasses, such as humidity, fat and smell together with, placed in front of the first filter composition, an air in-let chamber which is connected to the out-let end of the filter house and ending up in open air in an area outside the air in-let chamber, which in or close to these area communicates with the air out-let canal via at least one air in-take opening, whereby between this and the convector connection is placed a plate or air deflection .

4. Apparatus according to claim 1,2 or 3, **characterized** by at least the treatment chamber, the convector and the filter device are surrounded by a cabinet with a ventilation device for passing another air current through the area of the cabinet where the convector is placed.

5. Apparatus according to each of the claims 1 - 4, **characterized** by the ventilation equipment consisting of a pair of ventilation openings, which are constructed in the wall of the cabinet as well over as under the area of the cabinet, where the convector is placed.

6. Apparatus according to each of the claims 1 - 5, **characterized** by the fact, that between the treatment chamber and the wall of the cabinet there is a space, and as well over as under this space are constructed a second pair of ventilation openings in the wall of the cabinet allowing a third air current to pass up through the space under the influence of the updrift in the air heatened by the treatment chamber.

7. Apparatus according to each of the claims 1 - 6, **characterized** by the treatment chamber at the bottom having an air discharging opening, which during the treatment process can be closed by at gate, and by opening of this gate allow the ready product to fall through a shaft which mainly runs vertically in the chamber under the discharging opening, and at the bottom has an opening for removal of the product, and on the top communicates with the treatment chamber via its air in-let opening.

8. Apparatus according to claims 1 - 7, **characterized** by the cabinet having a first in-let opening and the treatment chamber an opposite second in-let opening and that these openings can be closed by respectively a first and a second door which are inter-connected to one another by an articulation forcing the two doors to open and close simultaneously; that the first door is U-shaped with sidefli Oe which are cut off the swivel axis in points mainly at the same distance from the lower edges of the two openings, so that the first door will stretch between these edges in open position, while the second door, which is top suspended on the wall of the chamber, stretches between the upper edges of the opening when in open position.

9. Apparatus according to each of the claims 1 - 8, **characterized** by the convector consisting of a number of tubes, constructed by a heat-conducting material and places eight a distance to one another in one or more rows across the cabinet.

10. Apparatus according to each of the claims 1 - 9, **characterized** by the treatment chamber downwards being limited by a cylindric cap, and that coaxial to this is placed a driving wheel rotated by a driving mechanism and a number of carriers along the periphery, and that the heat source consists of a radiant panel as for example quartz lamps.

## Patentansprüche

1. Gerät zur Wärmebehandlung eines partikularen Nahrungsmittels in einer Behandlungskammer, in der das Nahrungsmittel der Wärmewirkung aus einer Heizquelle ausgesetzt wird, und die beim Prozess vom Nahrungsmittel abgegebenen Gase mit Hilfe eines Gebläses in einem Luftstrom abgesaugt werden, der über eine Filtervorrichtung zur Beseitigung der Gase aus der Luft sowie über eine Luftverbindung zwischen der Filtervorrichtung und der Behandlungskammer ins Freie ausgestossen wird, **dadurch gekennzeichnet**, dass die Luftverbindung als Konvektor ausgebildet ist.

2. Gerät nach Anspruch 1, **dadurch gekennzeichnet**, dass in der Wand der Behandlungskammer, insbesondere an der der Verbindung des Konvektors mit der Kammer entgegengesetzten Seite zumindest eine Lufteinlassöffnung mit einem Querschnitt vorgesehen ist, der auf den Einlass des erforderlichen und zur korrekten Wärmebehandlung des Nahrungsmittels hinreichenden Luftvolumens abgestimmt ist, durch welche die Luft unter dem Einfluss eines vom Gebläse erzeugten Druckgefälles zwischen der Behandlungskammer und der Umgebung in die Behandlungskammer einströmt.

3. Gerät nach den Ansprüchen 1 und 2, **gekennzeichnet** durch eine Filtervorrichtung mit einem Filtergehäuse mit mehreren Filterzusammensetzungen zur Beseitigung des Gehalts an Gasen im Luftstrom, wie Feuchtigkeit, Fett und Geruch aus dem Luftstrom sowie mit einer vor der ersten Filterzusammensetzung befindlichen Lufteinlasskammer, die mit dem Auslassende des Filtergehäuses verbunden ist und in einem Bereich ausserhalb der Lufteinlasskammer ins Freie mündet, und die in diesem Bereich oder in dessen Nähe mit dem Luftauslasskanal über mindestens eine Lufteinlassöffnung in Verbindung steht, wobei zwischen dieser und der Konvektorverbindung eine Platte oder Luftablenkungsvorrichtung angeordnet ist.

4. Gerät nach Anspruch 1, 2 oder 3, **dadurch gekennzeichnet**, dass zumindest die Behandlungskammer, der Konvektor und die Filtereinrichtung von einem Gehäuse mit einer Lüftungseinrichtung zur Förderung eines zweiten Luftstroms durch den Gehäusebereich umgeben sind, in welchem der Konvektor angeordnet ist.

5. Gerät nach jedem der Ansprüche 1-4, **dadurch gekennzeichnet**, dass die Ventilationsausrüstung zwei in der Gehäusewand jeweils über und unter demjenigen Gehäusebereich befindliche Ventilationsöffnungen umfasst, in welchem der Konvektor angeordnet ist.

6. Gerät nach jedem der Ansprüche 1-5, **dadurch gekennzeichnet**, dass sich zwischen der Behandlungskammer und der Gehäusewand ein Raum findet, und dass sowohl über wie unter diesem Raum ein zweites Paar von Ventilationsöffnungen in der Gehäusewand vorgesehen ist, die einen durch den Auftrieb in der in der Behandlungskammer erwärmten Luft verursachten dritten, aufwärts durch den Raum gerichteten Luftstrom ermöglichen.

7. Gerät nach jedem der Ansprüche 1-6, **dadurch gekennzeichnet**, dass die Behandlungskammer am Boden eine während des Behandlungsvorgangs mit Hilfe einer Tür verschliessbare Luftauslassöffnung aufweist, dass durch das Öffnen dieser Tür das fertige Nahrungsmittel durch einen in der Kammer unter der Auslassöffnung im wesentlichen senkrecht verlaufenden Schacht herabfällt, und dass der Schacht am Boden eine Öffnung zum Entfernen des Nahrungsmittels aufweist und oben über die Lufteinlassöffnung der Behandlungskammer mit dieser in Verbindung steht.

8. Gerät nach Anspruch 1-7, **dadurch gekennzeichnet**, dass das Gehäuse eine erste Einlassöffnung und die Behandlungskammer eine dieser entgegengesetzte zweite Einlassöffnung aufweisen, dass diese Öffnungen mittels jeweils einer ersten und einer zweiten Tür verschliessbar sind, welche mittels eines die beiden Türen gleichzeitig öffnenden und schliessenden Gelenks mit einander verbunden sind; und dass die erste Tür U-förmig mit Seitenklappen ausgebildet ist, die um eine Schwenkachse in Punkten verschwenkbar sind, die sich annähernd im gleichen Abstand von der unteren Kante der beiden Öffnungen befinden, so dass sich die erste Tür in ihrer offenen Stellung zwischen diesen Kanten erstreckt, während die mit ihrem oberen Ende an der Kammerwand angelenkte zweite Tür sich in ihrer offenen Stellung zwischen den oberen Kanten der beiden Öffnungen erstreckt.

9. Gerät nach jedem der Ansprüche 1-8, **dadurch gekennzeichnet**, dass der Konvektor aus mehreren Rohren aus einem wärmeleitenden Material besteht, die in gegenseitigem Abstand in einer oder mehreren Querreihen im Gehäuse angeordnet sind.

10. Gerät nach jedem der Ansprüche 1-9, **dadurch gekennzeichnet**, dass die Behandlungskammer nach unten hin durch eine zylindrische Kappe abgegrenzt ist, dass koaxial mit dieser ein von einem Antriebsmechanismus angetriebenes rotierbares Treibrad mit mehreren an dessen Umkreis entlang vorgesehenen Trägern angeordnet ist, und dass die Wärmequelle aus einem Strahlungfeld, zum Beispiel Quarzlampen besteht.

## Revendications

1. Appareil pour un traitement thermique d'un produit alimentaire particulier dans une chambre de traitement dans laquelle le produit est exposé à une contrainte thermique depuis une source de chaleur, et les gaz, que le produit libère pendant le procédé sont aspirés vers l'extérieur au moyen d'un ventilateur dans un écoulement d'air qui, par l'intermédiaire d'un dispositif à filtre pour enlever les gaz de l'air et un raccord d'air entre le dispositif à filtre et la chambre de traitement, est rejeté à l'extérieur à l'air libre, caractérisé en ce que le raccord d'air est construit comme un convecteur.

2. Appareil selon la revendication 1, caractérisé par le fait que dans la paroi de la chambre de traitement en particulier du côté opposé au raccord du convecteur à la chambre, au moins une ouverture d'entrée d'air est réalisée par une section transversale ajustée pour laisser passer le volume d'air nécessaire et adéquate pour corriger le traitement thermique du produit dans la chambre de traitement sous l'influence de la différence de pression entre celle-ci et l'air libre, laquelle différence de pression est établie par le ventilateur.

3. Appareil selon la revendication 1 et 2, caractérisé par un dispositif à filtre comprenant un boîtier de filtre qui a un nombre de compositions de filtre pour enlever la teneur en gaz respectifs de l'écoulement d'air, tels que l'humidité, les matières grasses et l'odeur avec elles, une chambre d'entrée d'air placée devant la première composition de filtre qui est reliée à l'extrémité de sortie du boîtier de filtre et se terminant à l'air libre en une région à l'extérieur de la chambre d'entrée d'air qui communique dans ou à proximité de cette région avec le canal de sortie d'air par l'intermédiaire d'au moins une ouverture d'entrée d'air, une plaque ou un déflecteur d'air étant placé entre celle-ci et le raccord au convecteur.

4. Appareil selon la revendication 1, 2 ou 3, caractérisé en ce qu'au moins la chambre de traitement, le convecteur et le dispositif à filtre sont entoures par une armoire avec un dispositif de ventilation pour faire passer un autre écoulement d'air à travers la région de l'armoire où le convecteur est placé.

5. Appareil selon chacune des revendications 1 à 4, caractérisé en ce que l'équipement de ventilation comprend une paire d'ouvertures de ventilation qui sont construites dans la paroi de l'armoire aussi bien au-dessus qu'en dessous de la région de l'armoire où le convecteur est placé.

6. Appareil selon chacune des revendications 1 à 5, caractérisé par le fait qu'entre la chambre de traitement et la paroi de l'armoire il y a un espace, et aussi bien au-dessus qu'en dessous de cet espace une seconde paire d'ouvertures de ventilation est construite dans la paroi de l'armoire permettant à un troisième écoulement d'air de circuler vers le haut à travers l'espace sous l'influence de la dérive vers le haut dans l'air chauffé par la chambre de traitement.

7. Appareil selon chacune des revendications 1 à 6, caractérisé en ce que la chambre de traitement comprend au fond une ouverture de décharge d'air qui durant le procédé de traitement peut être fermée par une barrière et l'ouverture de cette barrière permet au produit prêt de tomber à travers un fût qui s'étend principalement verticalement dans la chambre sous l'ouverture de décharge, et au fond a une ouverture pour enlever le produit, et sur son sommet communique avec la chambre de traitement par l'intermédiaire de son ouverture d'entrée d'air.

8. Appareil selon les revendications 1 à 7, caractérisé en ce que l'armoire a une première ouverture d'entrée et la chambre de traitement a une seconde ouverture d'entrée opposée et en ce que ces ouvertures peuvent être fermées par respectivement une première et une seconde porte qui sont reliées entre elles l'une à l'autre par une articulation forçant les deux portes à s'ouvrir et à se fermer simultanément, et en ce que la première porte est en forme de U avec des ailes latérales qui sont évidées de l'axe de charnière en des points principalement à la même distance depuis les bords inférieurs des deux ouvertures, de telle manière que la première porte s'étend entre ces bords dans la position ouverte, alors que la seconde porte, qui est suspendue depuis le haut sur la paroi de la chambre, s'étend entre les bords supérieurs de l'ouverture dans sa position ouverte.

9. Appareil selon chacune des revendications 1 à 8, caractérisé en ce que le convecteur comprend un nombre de tubes réalisés en un matériau thermiquement conducteur et placés à une distance l'un de l'autre en une ou plusieurs rangées au travers de l'armoire.

10. Appareil selon chacune des revendications 1 à 9, caractérisé en ce que la chambre de traitement est limitée vers le bas par un capot cylindrique et en ce que, coaxialement à celui-ci sont placés une roue d'entraînement entraînée en rotation par un mécanisme d'entraînement et un nombre de supports le long de la périphérie, et en ce que la source de chaleur comprend un panneau rayonnant comme par exemple des lampes à quartz.
